(19)

**Europäisches Patentamt**
**European Patent Office**
**Office européen des brevets**

(11)  **EP 3 770 820 B1**

(12)  **EUROPEAN PATENT SPECIFICATION**

(45) Date of publication and mention
of the grant of the patent:
**30.10.2024  Bulletin 2024/44**

(51) International Patent Classification (IPC):
**G06N 3/092** *(2023.01)*     **G06N 3/045** *(2023.01)*

(52) Cooperative Patent Classification (CPC):
**G06N 3/045; G06N 3/092**

(21) Application number: **19187620.0**

(22) Date of filing: **22.07.2019**

(54) **MACHINE LEARNING PLANNER FOR A PHYSICAL SYSTEM**

MASCHINENLERNPLANER FÜR EIN PHYSIKALISCHES SYSTEM

PLANIFICATEUR D'APPRENTISSAGE PAR MACHINE POUR UN SYSTÈME PHYSIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.01.2021  Bulletin 2021/04**

(73) Proprietors:
• **Robert Bosch GmbH**
**70442 Stuttgart (DE)**
• **SAP SE**
**69190 Walldorf (DE)**

(72) Inventors:
• **Herman, Michael**
**71065 Sindelfingen (DE)**
• **van der Pol, Elise**
**1098 XH Amsterdam (NL)**
• **Welling, Max**
**1402 GN Bussum (NL)**
• **Oliehoek, Frans Adriaan**
**2600 AA Delft (NL)**
• **Kipf, Thomas**
**1019 WJ Amsterdam (NL)**

(74) Representative: **DeltaPatents B.V.**
**Fellenoord 370**
**5611 ZL Eindhoven (NL)**

(56) References cited:
• **MAXIMILIAN IGL ET AL: "Deep Variational
Reinforcement Learning for POMDPs",
ARXIV.ORG, CORNELL UNIVERSITY LIBRARY,
201 OLIN LIBRARY CORNELL UNIVERSITY
ITHACA, NY 14853, 6 June 2018 (2018-06-06),
XP080887946**
• **VAN HOOF HERKE ET AL: "Stable reinforcement
learning with autoencoders for tactile and visual
data", 2016 IEEE/RSJ INTERNATIONAL
CONFERENCE ON INTELLIGENT ROBOTS AND
SYSTEMS (IROS), IEEE, 9 October 2016
(2016-10-09), pages 3928 - 3934, XP033011928,
DOI: 10.1109/IROS.2016.7759578**
• **AMY ZHANG ET AL: "Learning Causal State
Representations of Partially Observable
Environments", ARXIV.ORG, CORNELL
UNIVERSITY LIBRARY, 201 OLIN LIBRARY
CORNELL UNIVERSITY ITHACA, NY 14853, 25
June 2019 (2019-06-25), XP081384043**

**EP 3 770 820 B1**

**Description**

**FIELD**

The presently disclosed subject matter relates to a machine learning device for learning a planner for a physical system, a machine learning planner for a physical system, a machine learning method for learning to plan for a physical system, a machine learning planning method for a physical system, a transitory or non-transitory computer readable medium

**BACKGROUND**

Currently, planning methods to solve a planning task typically do so on a reduced state space, such as a discrete graph. For example, a Markov decision problem also known as a Markov decision process (MDP) may be formulated for the planning problem. A Markov decision process is a discrete time stochastic control process. It provides a mathematical framework for modeling decision making in situations where outcomes may be partly random and/or partly under the control of a decision maker.

An MDP typically has a set of states, in which the process can be, and actions that can be performed on the system. At each time step, the process is in some state $s$, and the decision maker may choose any action $a$ that is available in state s. The process responds at the next time step by randomly moving into a new state s'. Some states may give the decision maker a reward. The probability that the process moves into its new state s' may depend on the chosen action and is given by a state transition function $P_a(s, s')$.

A policy may be obtained for a MDP by solving it. The policy describes an action for each state in the MDP to optimize or at least improve the rewards received. The MDP can be solved through a variety of methods, such as dynamic programming. MDPs are used in many disciplines, including robotics, and manufacturing.

Many real world decision making tasks may be modelled with an MDP, yet establishing such an MDP may be hard.

The paper "Value Iteration Networks" by Aviv Tamar, et al., discloses a value iteration network (VIN). It uses a neural network with a planning module embedded within. The VIN can learn to plan, and is suitable for predicting outcomes that involve planning-based reasoning. In this approach, the value-iteration algorithm is represented as a convolutional neural network, and trained end-to-end using backpropagation. For example, the VIN may learn policies on discrete and continuous path-planning domains.

The known approach uses a CNN-based architecture that is applied on 2D lattices as state spaces. This imposes a restriction on the models that can be learnt. Moreover, the state space is typically not known a-priori.

Reference is made to the article "Learning Causal State Representations of Partially Observable Environments", by Amy Zhang, et al., which proposes an algorithm to approximate causal states, which are the coarsest partition of the joint history of actions and observations in partially-observable Markov decision processes (POMDP).

**SUMMARY**

It would be advantageous to have an improved machine learning device for learning a planner for a physical system, and a machine learning planner for a physical system

For example, the machine learning device may learn an encoder function and a transition function from a set of training data which comprises pairs of an action and a corresponding observable state transition. The latent space may be a continuous vector space. Once the encoder and transition functions have been learned, a Markov decision problem may be defined on a set of vertices, e.g., corresponding to points in the latent space. Transition probabilities, e.g., a probability transition function may be obtained from the latent transition function.

In this way, a state space can be learned based on environmental dynamics that is observed in the training data. The Markov decision problem that can be defined on the state space allows for dynamic programming for planning purposes. Interestingly, it is not needed to know the state space a-priori. Furthermore, no particular restrictions need to be imposed on the problem or the structure of its associated graph on the vertices.

In an embodiment, planning an action for a physical system may take several phases. For example, first the structure of the state space may be learnt, e.g., the encoder and transition functions. This part may be referred to as pre-training. In a second phase, after pre-training, a Markov decision problem may be formulated and solved. Obtaining an MDP from the latent space may be called discretization. Note that using an MDP with a discrete state and/or action space eases planning. The MDP may be obtained directly for the desired planning, or first a general Markov decision problem may be formulated which may be modified later for a particular goal. In a third phase, the Markov decision problem is solved to obtain a policy, or at least a next action to take in the physical system. A control signal may be generated to cause the action in the physical system. The machine learning device may be configured to perform at least the pre-training phase. The machine learning planner may be configured to perform at least the third phase. The second phase may be done either by the machine learning device for learning a planner or the machine learning planner for a physical system, or distributed between them. One could configure a single device to perform all parts.

It was found that the learned representations are plannable. Running dynamic programming in the latent space results in good policies for the input space. Moreover, the pre-training part does not need to depend on the particular planning goal. Thus, one can, without retraining, plan for a new goal and/or a new reward.

The physical system comprises one or more movable parts and may be arranged in one of multiple observable states. The observable states comprise information regarding the position and/or orientation of the one more movable parts. However, there is no requirement that the observable states provide an ordered list of said position and/or orientation. In fact the observable states may comprise the output of several types of sensors. Such a sensor may directly provide one or more location parameters, wherein a location parameter represents a location, a translation, or an angle of a movable part of the physical system. However, the output of a sensor may also correlate less directly with location parameters. In particular, a sensor may be an image sensor and an observable state may comprise an image of the system. The output of the sensors may be noisy, and may be low or high dimensional.

The machine learning device for learning a planner and the machine learning planner are electronic devices. For example, they may be implemented in a computer, possibly arranged with one or more sensors for obtaining observable states, and/or with a controller for generating a control signal in dependency on a planned action.

The method of planning described herein may be applied in a wide range of practical applications. Such practical applications include, e.g., the planning of autonomously moving devices, such as vehicles and robot arms.

A further aspect are a computer-implemented machine learning method according to claim 14, and a transitory or non-transitory computer readable medium according to claim 15.

## BRIEF DESCRIPTION OF THE DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1a schematically shows an example of an embodiment of a machine learning device,
Figure 1b schematically shows an example of an embodiment of a machine learning device,
Figure 1c schematically shows an example of an embodiment of a machine learning planner,
Figure 1d schematically shows an example of an embodiment of a machine learning planner,
Figure 2a schematically shows an example of an embodiment of a physical system,
Figure 2b schematically shows an example of an embodiment of a robot arm,
Figure 3a schematically illustrates an example of data structures in an embodiment of a machine learning device,
Figure 3b schematically illustrates an example of data structures in an embodiment of a machine learning planner,
Figure 4 schematically illustrates an example of MDPs in an embodiment of a machine learning device,
Figure 5 schematically illustrates an example of an embodiment of a machine learning device,
Figure 6 schematically illustrates an example of an embodiment of a machine learning planning method for a physical system,
Figure 7a schematically shows a computer readable medium having a writable part comprising a computer program according to an embodiment,
Figure 7b schematically shows a representation of a processor system according to an embodiment.

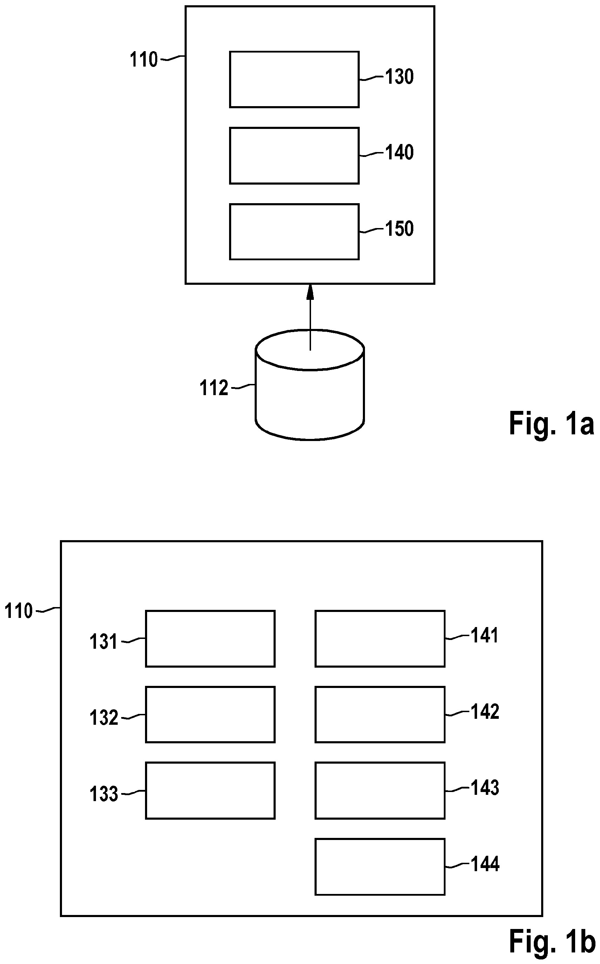

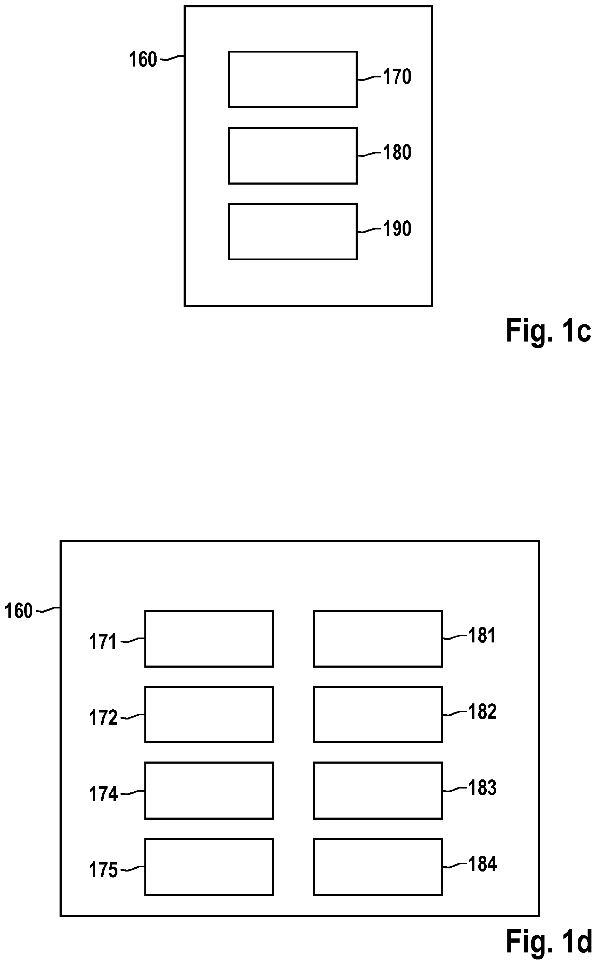

List of Reference Numerals in figures 1-3b:

110    a machine learning device
112    training data storage
130    a processor system
131    an encoder function
132    a latent transition function
133    a discretizer
140    a memory
141    an action storage
142    an observable state storage

| 143 | a latent state storage |
|---|---|
| 144 | a Markov decision problem storage |
| 150 | a communication interface |
| 160 | machine learning planner |
| 170 | a processor system |
| 171 | an encoder function |
| 172 | a latent transition function |
| 174 | a Markov planner |
| 175 | a controller |
| 180 | a memory |
| 181 | an action storage |
| 182 | an observable state storage |
| 183 | a latent state storage |
| 184 | a Markov decision problem storage |
| 190 | a communication interface |
| 200 | a physical system |
| 210 | movable parts |
| 212 | an actuator |
| 214 | a sensor |
| 220 | a controller |
| 230 | a camera |
| 240 | a robot arm |
| 241 | a link |
| 242 | a tool |
| 243 | a joint |
| 310 | observable state space |
| 311 | an encoder function |
| 320 | latent state space |
| 321 | a latent transition function |
| 331 | a discretization |
| 332 | a probability assignment |
| 340 | a Markov decision problem |
| 341 | a set of vertices |
| 342 | transition probabilities |
| 344 | problem modification |
| 350 | an adapted Markov decision problem |
| 351 | an adapted set of vertices |
| 352 | adapted transition probabilities |
| 353 | additional vertices |
| 360 | an action |
| 361 | a Markov decision problem solver |
| 362 | an iteration |
| 1000 | a computer readable medium |
| 1010 | a writable part |
| 1020 | a computer program |
| 1110 | integrated circuit(s) |

1120     a processing unit
1122     a memory
1124     a dedicated integrated circuit
1126     a communication element
1130     an interconnect
1140     a processor system

DETAILED DESCRIPTION OF EMBODIMENTS

In the following, for the sake of understanding, elements of embodiments are described in operation. However, it will be apparent that the respective elements are arranged to perform the functions being described as performed by them.

**Figure** 1a schematically shows an example of an embodiment of a machine learning device 110. **Figure 1c** schematically shows an example of an embodiment of a machine learning planner 160. For example, the machine learning device 110 of figure 1a may be used to train the parameters of the machine learning device, e.g., of neural networks, that may be used in the machine learning planner 160.

Machine learning device 110 may comprise a processor system 130, a memory 140, and a communication interface 150. Machine learning device 110 is configured to communicate with a training data storage 112. Storage 112 may be a local storage of system 110, e.g., a local hard drive or memory. Storage 112 may be non-local storage, e.g., cloud storage. In the latter case, storage 112 may be implemented as a storage interface to the non-local storage.

Machine learning planner 160 may comprise a processor system 170, a memory 180, and a communication interface 190.

Systems 110 and/or 160 may communicate with each other, external storage, input devices, output devices, and/or one or more sensors over a computer network. The computer network may be an internet, an intranet, a LAN, a WLAN, etc. The computer network may be the Internet. The systems comprise a connection interface which is arranged to communicate within the system or outside of the system as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

The execution of system 110 and 160 is implemented in a processor system, e.g., one or more processor circuits, e.g., microprocessors, examples of which are shown herein. Figures 1b and 1d show functional units that may be functional units of the processor system. For example, figures 1b and 1d may be used as a blueprint of a possible functional organization of the processor system. The processor circuit(s) are not shown separate from the units in these figures For example, the functional units shown in figures 1b and 1d may be wholly or partially implemented in computer instructions that are stored at system 110 and 160, e.g., in an electronic memory of system 110 and 160, and are executable by a microprocessor of system 110 and 160. In hybrid embodiments, functional units are implemented partially in hardware, e.g., as coprocessors, e.g., neural network coprocessors, and partially in software stored and executed on system 110 and 160. Parameters of the network and/or training data may be stored locally at system 110 and 160 or may be stored in cloud storage.

The planner is learned for and applied to a physical system. The physical system is arranged with multiple observable states into which the physical system may be configured. A set of multiple actions may be performed on the physical system to cause a state transition from a first observable state of the physical system to a second observable state of the physical system. The states that can be observed in the physical system may be continuous or discrete. The feedback on the states may be noisy. An observable state comprises the sensor data obtained from one or multiple sensors.

The physical system comprises one or more movable parts. The observable states comprise information describing the position and/or orientation of the one more movable parts, etc. The planner is a motion planner for planning a sequence of actions to control the physical system towards a goal state, e.g., a particular desired configuration of its movable parts.

The observable states of the physical system are obtained by observing the physical system with one or more sensors. For example, the one or more movable parts may be observed with the one or more sensors. A sensor may directly measure some aspect of a movable part, e.g., its movement, locations, orientation, etc. Such a sensor may be integrated in the physical system, e.g., integrated in or with a ball bearing of the system, etc. For example, a sensor may be configured to measure a location parameter, e.g., of the physical system, e.g., of a movable part. For example, a location parameter may represent a location, a translation, or an angle of a movable part of the physical system. The sensor may also indirectly measure the movable parts, for example, the sensor may obtain an image modality such as a video, radar, LiDAR, ultrasonic, motion sensor, etc. For example, the observable state may comprise an image of the physical system.

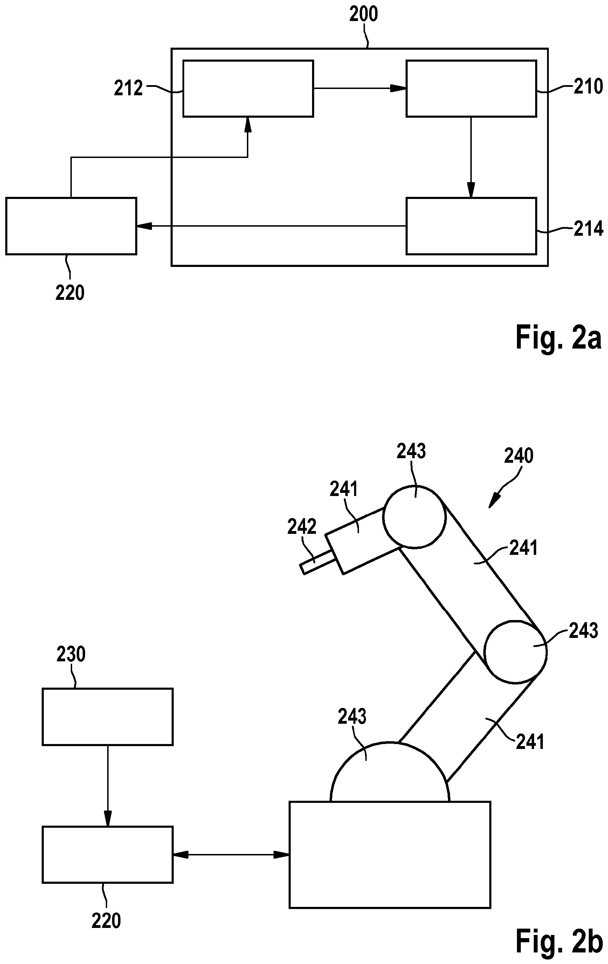

**Figure 2a** schematically shows an example of an embodiment of a physical system 200. Shown are movable parts 210, which may be known movable parts such as joints, linkages, blocks, axes, wheel, gears, etc. In particular, the movable parts may comprise multiple joints, the actions comprising rotating and /or translating a joint. The joints may be connected to other moving parts, e.g., linkages. For example, joints may be prismatic, e.g., a slider, only translation; cylindrical, e.g., rotating and sliding; or revolute, e.g., only rotation.

Figure 200 also shows an actuator 212 and a controller 220. Actuator 212 is configured to receive a control signal from controller 220 to cause change in the location parameters of the movable parts. For example, some part may be shifted, turned, or the like. Finally, a sensor 214 or sensor system 214 provides feedback on the state of the physical system. For example, sensor 214 may comprise one or more image sensors, force sensors, etc.

For example, the physical system may be a robot, a vehicle, a domestic appliance, autonomous driving car, a power tool, a manufacturing machine, etc., typically under computer-control. The planner may be used to control a system, in which the planning task is discrete, while observations are continuous and high-dimensional.

For example, the physical system may be a vehicle, e.g., a car, e.g., configured for autonomous driving. Typically, the car makes continuous observations, e.g., distance to the exit, distance to preceding vehicle, exact position inside a lane, etc. A controller of the vehicle may be configured to determine how to act and where to drive, e.g., change to other lane. For example, the further may be used to learn a state of the car in it environment, while the driving actions that the car may take influence the state of the car.

For example, the physical system may be a manufacturing machine. For example, the manufacturing machine may be arranged with a discrete set of actions, possibly with continuous parameters. For example, the actions may comprise a tool to use and/or parameters for a tool, e.g., an action drill at a specific location or angle, etc., For example, the manufacturing machine may be a computer numerical control (CNC) machine. A CNC machine may be configured for the automated control of machining tools, e.g., drills, boring tools, lathes, etc., or of 3D printers by means of a computer. A CNC machine may process a piece of material, e.g., metal, plastic, wood, ceramic, or composite, etc., to meet specifications.

The observable state of the manufacturing machine is often continuous, e.g., the noisy location of the drill, a noisy location of the part that is manufactured. An embodiment may be configured to plan how to create the part, e.g., first drill at that location, then do some second action, and so on.

**Figure 2b** schematically shows an example of an embodiment of a robot arm 240. In an embodiment, the physical system comprises a robot arm. An example, of a robot arm is shown in figure 2b. For example, the robot arm may comprise one or more links 241, tools 242, and joints 243. The robot arm may be controlled, e.g., by a controller 220, e.g., to actuate the joints. Robot arm 240 may be associated with one or more sensors, some of which may be integrated with the arm. A sensor may be a camera, e.g., a camera 240. The sensor outputs, including optionally, an image, may be an observable state of the robot arm.

The movement of the robot arm may be restricted in various ways. For example, not all settings of the movable parts, e.g., joints, may be possible. For example, movement of the arm may be restricted by the environment. For example, other machines, barriers, and safety restrictions may restrict possible movement. Furthermore, some movements may be physically impossible given the specifications of the system. The system may also comprise multiple robot arms, e.g., two or more. Possible movement of one of the arms may be restricted by the position of the other arm. This is no problem as the combined positon of the two arms may be represented in a (observable) state.

For example, a manipulation task may be solved for the robot arm, which may comprise multiple joints and links that can be rotated and translated. The robots job could be to pick up an object and move it to some position. Even though observations may be continuous and high-dimensional, e.g., states of all joints, sensor measurements such as camera images, etc., there often exist discrete graphs that can solve the planning task. Such a planner may be learned using an embodiment. Furthermore, even if an MDP may not perfectly represent a physical system, e.g., because the observable states and/or action may be continuous, whereas the MDP is discretized, a learned MDP nevertheless gives a good way to generate actions that will bring a goal closer, as it provides a good approximation of the behavior of the system. For example, some states can be aggregated to joint latent states if they behave similarly when the same action is applied.

**Figure 1b** schematically shows an example of an embodiment of a machine learning device 110. For example, machine learning device 110 is configured to learn a planner for a physical system. The planner comprises a Markov decision problem. For example, the planner may comprise a Markov graph and transition probabilities, which may be adapted for solving a planning problem. The physical system is arranged with multiple observable states and a set of multiple actions which may be performed on the physical system to cause a state transition.

Machine learning device 110 comprises a storage 112 configured to store training data. The training data comprises multiple pairs of an action and a corresponding observable state transition from a first observable state to a second observable state. For example, the physical system, e.g., a robot arm, may be observed while in action. The observable state $s$ before an action $a$ being performed and the observable state s' may be measured. For example, the observable states may be obtained from a sensor, and the action may be obtained from a controller. The action $a$ and the state transition s $\rightarrow$ s' may be recorded in the training data. For example, the states s and s' may comprise a picture of the system before and after action *a* was taken. For example, action *a* may be to increase an angle with some predetermined amount, increase a voltage, a current, etc. The actions may be discretized beforehand to a finite set of action. This is not needed, and instead the actions as available in the training data may be used. For example, observable states and actions may be obtained by sampling the physical system. For example, sensor readings and/or actuator reading may be obtained at a certain frequency, e.g., at 1 Hz, 10 Hz, 100 Hz, etc., the sensor readings may be comprised in an observable states, while a delta in the actuator reading may represent an action. Actions may be rounded to keep their number small.

For example, system 110 may comprise action storage 141 for storing actions, observable state storage 142 for storing observable states and a latent state storage 143 for storing latent states. These storages may be part of the memory.

System 110 is configured for a pre-training phase to learn a latent representation of the observable states. For example, the latent representations may encode information about closeness of observations such that latent transitions correspond to transitions of real world observations, so that the latent representations may later be used for planning.

The system 110 comprises encoder function 131 which is configured to map an observable state to a latent state in a latent space, and a latent transition function 132 which operates on the latent space. The latent transition function 132 is configured to map an action and a first latent state to a second latent state.

The encoder function 131 and the latent transition function 132 are both machine learnable functions and are trained on the training data so that the latent transition function aligns with observable state transitions in the training data. For example, at least one of the encoder function and the latent transition function are neural networks; they may both be neural networks, e.g., a convolutional network.

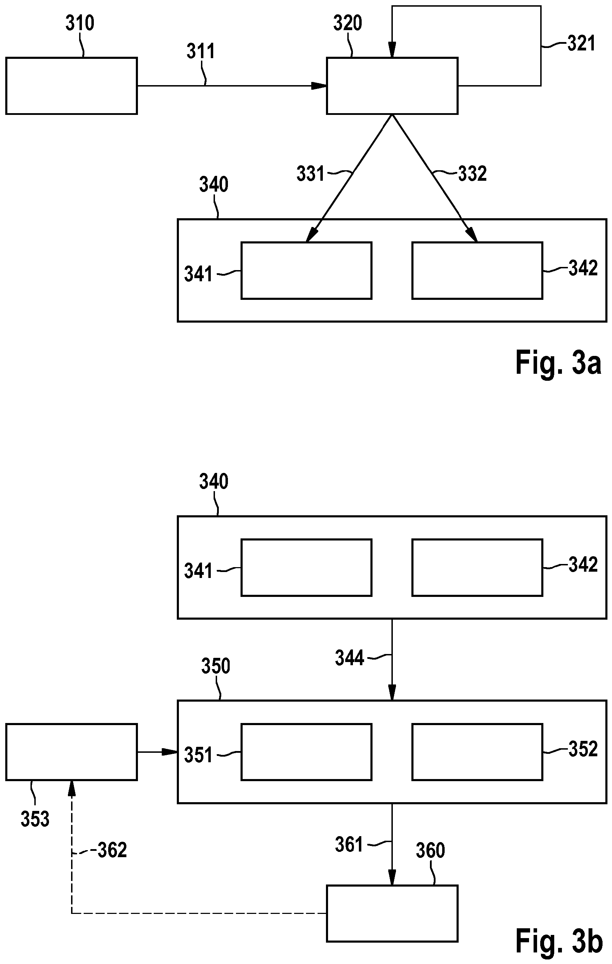

Figure 3a schematically illustrates an example of data structures in an embodiment of a machine learning device. Shown in figure 3a is an observable state space 310. For example, observable state space 310 may be modelled as a vector space. For example, an observable state may be encoded as the concatenation of the sensor outputs. Encoder function 131 maps 311 an element of the space 310 to a latent space 320. Also latent space 320 may be vector space. Typically, latent space 320 may be of a lower dimension than space 310. Acting on the latent space 320 is the transition function 321. Transition function 321 learns the likely effect of an action on a state as encoded in a latent representation.

Mathematically, one may use the following notation:

Training data, also referred to as the 'Experience Buffer': $\mathcal{B} = \{(s_t, a_t, s_{t+1})\}_{l=1}^{T}$

States : $s_t \in \mathcal{S}$

Actions: $a_t \in \mathcal{A}$

Latent representation of state $s_t$: $z_t \in Z$

Latent encoder: $E: S \rightarrow Z$

Latent transition model: $T_\phi: Z \times A \mapsto Z$

In the training of the encoder and training functions the following observations may be used to design a loss functions. The latent representations that should allow for planning and should encode information. Accordingly, one may have terms in the loss function that cause one, or more, or all of the following:

1. subsequent observations should be close in latent space,
2. latent transitions correspond to transitions in the real world and the embedding into latent space, and
3. two random samples should be far from each other to spread samples over the hypersphere observations.

To accommodate the latter, one could include an energy-based hinge loss. A possible loss function may be:

$$\mathcal{L} = d(z_t, z_{t+1}) + d\big(T_\phi(z_t, a_t), z_{t+1}\big) + \max\big(0, \gamma - d(z_\times, z_{t+1})\big)$$

With d(.,.) being a distance metric, such as squared Euclidean distance. This loss function induces that the latent transition model is consistent with encodings of subsequent samples, while two random samples should have large distances as induced by the hinge loss. In the above equation $z_x$ is the encoding of a random observable state in the training data.

This loss function induces that the latent transition model is consistent with encodings of subsequent samples, while two random samples should have large distances, e.g., as induced by the hinge loss.

It can be desirable to construct a latent space with specific structure, e.g. that it is easier interpretable, or that actions should only have a local effect on the latent state. The translation is one example for this. For example, instead of learning transition function $T_\phi$ directly, one may define $T_\phi(z_t, a_t) = z_t + T'_\phi(z_t, a_t)$ and learn $T'_\phi$ instead. The additive part $z_t + T'(z_t, a_t)$ enforces transitions to be translations in latent space.

Once the encoding and transition functions have been learned the latent representation provide a good representation of the way actions operate on the physical system. To apply a planner such as a Markov decision planner, a discretization is performed. System 110 may comprise a discretizer 133, e.g., a discretization unit. Discretizer 133 may be configured to discretize the latent space by selecting a set of vertices in the latent space, and to define a Markov decision problem on the set of vertices. The transition probabilities may be obtained from the latent transition function.

For example, figure 3a illustrates this. Once observable states can be suitably encoded in the latent space, a discretization 131 is performed on the latent space to obtain a set of vertices 341. Moreover, transition probabilities, e.g., a probability transition function, may be assigned 332. For example, the transition probabilities may indicate given a first state s and an action a, the probability of entering state s'. The set of vertices together with the probability assignment define a Markov decision problem. For example, the Markov decision problem may be stored in the Markov decision problem storage 144.

There are several ways in which one could select the vertices for set 341 in the latent space. For example, one could select random points from the latent space. However, this runs the risk that points are selected that do not correspond to physically realizable states. Another option is to manually select observable states that give a good representation of the possible states of the physical system, and encode these into the latent space. However, this may be tedious, if the number of state is large, and moreover runs the risk of omitting important states. Good results have been obtained by taking the latent states that correspond to the observable states in the training data as the vertices for set 341. If desired the set may be reduced in size by taking a sub-set, for example, a randomly selected subset. In that way, the discretized state space only comprises states that can actually be encountered when actuating the system.

Duplicates in the selected sets may be removed as they do not provide additional information. A selected latent point that is close to another selected latent point, e.g., within a distance bound, may also be removed. The latter step reduces the size of the set 341. Nevertheless, the latter step did not turn out to be required in experiments, so that it is optional. The random sampling technique is beneficial as it provides both good coverage of the latent space and higher density of discrete latent states that the agent is more likely to encounter.

After pre-training, one can define edges between states as based on closeness in latent space from the state predicted by the learned transition function, e.g., under the metric used for pre-training. One way to do this is by using a temperature-softmax over the distances to all other states in the set. These edges may be denoted as the transition function T(s, a, s'). For example, a transition probability for an action from a first vertex in the set of vertices to a second vertex in the set of vertices may comprise applying the latent transition function to the first vertex and action to obtain a predicted vertex and computing a distance in the latent space between the predicted vertex and the second vertex. For example, one may compute a distance in the latent space between the predicted vertex and all other vertices in the set, and scale accordingly, e.g., in a softmax.

In this way, a Boltzmann distribution over potential successor states is defined, so that the likelihood is high, if there is high similarity between a successor state and the potential transition state. Other distance functions may be used instead.

Scaling probability based on the distance from the predicted result of applying action a, has the advantage that it is no problem that the learned transition function does not necessarily end up in one of the selected discrete states.

The resulting Markov problem is versatile as no information of goal states needs to be included, when learning the encoder and transition function. For example, to plan towards a particular goal, e.g., to a particular latent state in the selected set, that is to say to an observable state that corresponds to it, one may add a reward function to the Markov problem, and possibly one or more additional vertices. An observable reward function may be learned as well, and this may in fact improve the learning of the encoder and transition function. Interestingly, if the learned reward function is later replaced by a new reward function, e.g., to plan towards a different goal, or for a different reward, the encoder and transition functions do not need to be relearned.

For example, a reward function may assign a reward for each of the state in the set, e.g., set 341. For example, the reward may be zero everywhere except in one or more desired states. In the desired states the reward may be 1, or may be proportional to the desirability of a state. Furthermore, one may add an absorbing state to the Markov decision problem, into which absorbing state the Markov decision problem transitions after entering the goal state. Such an absorbing state avoids that the planner tries to repeatedly enter the goal state. A goal state may correspond to one of the states in the selected set of vertices. Likewise, the starting state, e.g., a current state of the physical system, may correspond to a vertex in the set of vertices. However, this is not needed if a goal or starting state is desired that is not in set 341, then it can be added, by encoding the observable start of goal state and add it to the vertices. For example, one may directly add a goal state by encoding it: $z_q = E_\phi(s_q)$. The transition probabilities for the new vertices may be added in the same way as above, e.g., using the learned transition function.

Once a reward function, e.g., for a goal state is defined, the Markov problem can be solved. Such a solution would indicate an action to take for each vertex in the set, including the starting state. For example, the Markov decision problem may be solved to obtain a policy mapping, the policy mapping from the latent states to actions to reach a latent goal state. After defining the latent MDP, one can use the standard formulation of the Value Iteration algorithm, e.g.,

$$Q_a^{(l+1)} = T^{(a)}\big(R + V^{(l)}\big)$$ . The resulting Q-values are given by VIN-updates $$V^{(l+1)} = \max_a Q_a^{(l+1)}$$ where $V^{(0)} = 0$.

However, one may use any of the many variant algorithms for solving an MDP problem.

Completing the MDP with one or more of a goal state, a starting state and a reward function, and/or solving the corresponding MDP may be done in the machine learning device 110 or in the machine learning planner 160, or both.

As pointed out above, the latent space may be any conventional latent space, e.g., a multi-dimensional space over the real numbers. In such an unbounded vector space, system 110 may potentially learn undesired solutions, e.g., pushing all latent points maximally apart. This can be avoided, e.g., with a term in the loss function that counter this tendency, e.g., a hinge loss.

Adding the hinge loss to the loss term, softly enforces a maximum distance constraint, but cannot guarantee that this constraint will be satisfied. Consequently, the loss function might sacrifice constraints against consistency or consistency against constraints. This can yield undesirable effects that are hard to interpret, when learning graph embeddings.

In an embodiment, the latent space is a topologically compact space, in particular, a hypersphere, e.g., the unit hypersphere. A hypersphere is the set of points in a vector space of a given dimension, at a constant distance from a given point called its center.

There are several ways to obtain a hypersphere as a latent space. For example, one may normalize the output vector of a neural network to have length a unit length, e.g., one. It is also possible to softly penalize violations; or to combine the two approaches.

For example, the encoder may map observable states to a point on the unit hypersphere. As the space is compact, observations are embedded into a bounded space with bounded distances. Thus the space itself induces a hard constraint on the maximum distance, a hinge loss is not needed. For example, a loss function might only comprise terms for closeness of subsequent latent states, the transition consistency, and distance maximization (e.g., for spreading the latent space embeddings over the hypersphere).

For example, loss function that one may use, without a hinge loss is the following:

$$\mathcal{L}(z_t, a_t, z_{t+1}, z_x) = d(z_t, z_{t+1}) + d\big(z_{t+1}, T_\phi(z_t, a_t)\big) - d(z_t, z_x)$$

The sample $z_x$ is the latent representation of a random observable state in the training data. With d being a distance metric, such as squared Euclidean distance, or cosine distance, .e.g., cosine similarity. The latter is a good choice if the latent space is a hypersphere; or for the part of the latent space which is a hypersphere.

Furthermore, the hypersphere embedding allows for using cosine similarity between latent space embeddings, which more naturally measure distances between rotations. Hence, this hypersphere is more suited to embed observations of rotations. For example, in many robotic problems one has to embed observations that consist of angles, e.g., due to the state space of robot joints. Cosine similarity on the hypersphere turns out to be more suitable for such types of observations.

For example, one may compute a distance in the latent space between the predicted vertex and all other vertices in the set, and scale accordingly, e.g., in a softmax.

For example, a probability transition function T may be modelled as:

$$T(s' = j | s = i, a) = \frac{\exp\big(z_j^T z_i^{(a)}/\tau\big)}{\sum_{k \in \mathcal{S}} \exp\big(z_k^T z_i^{(a)}/\tau\big)}$$

The formula above denotes the probability to transition from a state i to a state j by applying action *a*. The state $z_i^{(a)}$ denotes $z_i^{(a)} = \frac{T_\phi(z_i, a)}{\|T_\phi(z_i, a)\|}$ , in which $T_\phi(z_i, a)$ denotes the transition predicted by the learned transition function. In this way, a Boltzmann distribution over potential successor states is defined, so that the likelihood is high, if the cosine similarity between a successor state and the potential transition state is high. Other distance functions may be used instead of cosine similarity.

Instead of a hypersphere, other choices for the latent space are possible, for example, the latent space may be a product of a hypersphere and a further space, or a product of two or more hyperspheres, e.g., a torus. The latent space may be a product of a hypersphere and a conventional vector space. The distance function may then comprise a cosine similarity.

**Figure** 1d schematically shows an example of an embodiment of a machine learning planner 160. The machine learning planner is configured to plan for the physical system, e.g., to plan movement. The machine learning planner does not need to perform the pre-training phase. The machine learning planner is configured with a trained encoder and transition function. The machine learning planner is configured with the Markov decision problem.

Machine learning planner 160 comprises a Markov decision problem storage 184 configured to store a set of vertices in a latent space to define a Markov decision problem. Storage 184 may also store transition probabilities among the vertices. The transition probabilities could instead be computed by system 160 from the vertices and the transition function, e.g., as indicated above.

Machine learning planner 160 comprises an encoder function as trained by system 110. The encoder function is configured to map an observable state to a latent state in the latent space. For example, Machine learning planner 160 may comprise a latent state storage 183. The encoder is used to map a new observable state into the latent space. For example, this may be done to add a new goal or starting state to the set of vertices, such as a starting state, current state, etc.

Machine learning planner 160 may comprise a latent transition function 172, e.g., as trained by system 110. The latent transition function 172 may be used to define transition probabilities between vertices, and in particular between added vertices, such as an added goal vertex and the other vertices.

Machine learning planner 160 is configured to obtain a current observable state of the physical system and a goal observable state of the physical system, and mapping the current observable state and the goal observable state to a current latent state and a goal latent state. The 160 comprises a sensor to obtain the current observable state. For example, the current observable state and/or a goal observable state may be obtained from storage. Machine learning planner 160 may comprise an observable state storage 182. Likewise, a reward function may be added, etc., as indicated above.

Once the MDP is fully determined a policy mapping for the Markov decision problem is obtained to reach the goal latent state from the current latent state. For example, the VIN algorithm may be used to compute the policy. From the policy action obtained that is to be applied to the current observable state, to bring it closer to the goal state. For example, planner 160 may comprise a Markov planner 174 for solving an MDP and an action storage 181 for storing an action.

Finally, a controller 175 of planner 160 is configured to generate a signal for the physical system to transition from the current observable state according to the obtained action.

**Figure 3b** schematically illustrates an example of data structures in an embodiment of a machine learning planner. Shown is the Markov decision problem 340 as obtained from a training device such as system 110. Markov decision problem 340 comprises a set of vertices 341 and transition probabilities 342, e.g., a probability transition function.

The problem may be modified 344 to obtain an adapted Markov decision problem 350. For example, additional vertices 353 may be added to set 341, to obtain set 351. The transition probabilities may be extended with transition probabilities between the added vertex/vertices and set 341, thus obtaining adapted transition probabilities 352. Also a reward function may be added. The added vertices may include a goal state, a current state, an absorbing state, etc. An encoder function may be used to map an observable state to a latent state in the latent space.

Solving the adapted MDP, e.g., with a Markov decision problem solver 361 leads to a policy and in particular to an action 360 for the current state. The policy may be executed, e.g., until the goal is reached. For example, at each observable state the action in the policy for the corresponding latent state may be executed. This approach works especially well if the physical system has clearly demarcated states itself.

If the relationship between observable states and the latent states is less clear, e.g., in case of continuous observable states, there are several approaches that can be taken. For example, one may ensure that the current state of the physical system is represented in the MDP, e.g., by encoding the current state and including the encoded latent state in the selected set of vertices. In that way, the policy that is obtained will include an action at least for the current state. After that action has been taken, one may observe the new state of the physical system and map it to the set of vertices 351. There are several approaches that may be taken. For example, one may set the new latent state in set 351 to the vertex in the latent that is closest to the new observed state after encoding. For example, one may obtain a Q value for the added state by interpolating Q values for other states, e.g., based on distance in the latent space. The advantage is that one does not need to solve the MDP. One could also add a new point to the set to represent the new state together with new transition probabilities. One may, or may not, remove the previous current state. Interestingly, solving the new MDP may use as a starting point the previous solution, so that faster convergence is obtained.

Figure 3b shows an optional iteration 362 to the adding of a new state 353, which may be the new current state.

In the various embodiments of system 110 and 160, the communication interfaces may be selected from various alternatives. For example, the interface may be a network interface to a local or wide area network, e.g., the Internet, a storage interface to an internal or external data storage, a keyboard, an application interface (API), etc.

The systems 110 and 160 may have a user interface, which may include well-known elements such as one or more buttons, a keyboard, display, touch screen, etc. The user interface may be arranged for accommodating user interaction for configuring the systems, training the networks on a training set, or applying the system to new sensor data, etc.

Storage may be implemented as an electronic memory, say a flash memory, or magnetic memory, say hard disk or the like. Storage may comprise multiple discrete memories together making up memory 140, 180 or storage 141-144, 181-184. Storage may comprise a temporary memory, say a RAM. The storage may be cloud storage.

System 110 may be implemented in a single device. System 160 may be implemented in a single device. Typically, the system 110 and 160 each comprise a microprocessor which executes appropriate software stored at the system; for example, that software may have been downloaded and/or stored in a corresponding memory, e.g., a volatile memory such as RAM or a non-volatile memory such as Flash. Alternatively, the systems may, in whole or in part, be implemented in programmable logic, e.g., as field-programmable gate array (FPGA). The systems may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, systems 110 and 160 may comprise circuits for the evaluation of neural networks.

A processor circuit may be implemented in a distributed fashion, e.g., as multiple sub-processor circuits. A storage may be distributed over multiple distributed sub-storages. Part or all of the memory may be an electronic memory, magnetic memory, etc. For example, the storage may have volatile and a non-volatile part. Part of the storage may be read-only.

Below several further optional refinements, details, and embodiments are illustrated.

An infinite horizon Markov Decision Process (MDP) $\mathcal{M}$ may be defined as a tuple $\mathcal{M} = (\mathcal{S}, \mathcal{A}, \mathcal{R}, \mathcal{T}, \gamma)$, where $s \in \mathcal{S}$ is a Markov state, $a \in \mathcal{A}$ is an action that an agent can take, $\mathcal{R}: \mathcal{S} \times \mathcal{A} \to \mathbb{R}$ is a reward function, that returns a scalar signal defining the desirability of some observed transition, $0 \leq \gamma \leq 1$ is a discount factor that discounts future rewards exponentially and $\mathcal{T}: \mathcal{S} \times \mathcal{A} \times \mathcal{S} \to [0,1]$ is a transition function, that for a pair of states and an action assigns a probability of transitioning from the first to the second state. The goal of an agent in an MDP is to find a policy $\pi: \mathcal{S} \times \mathcal{A} \to [0,1]$, a function assigning probabilities to actions in states that maximizes the cumulative reward over time until a horizon, or the *return* until a horizon $T: R_t = \sum_{K=0}^{\infty} \gamma^k r_{t+k+1}$. The expected return of a state, action pair under a given policy $\pi$ is given by Q-value function

$$Q_\pi: \mathcal{S} \times \mathcal{A} \to \mathbb{R}$$

and is defined to be $\mathbb{E}_\pi[R_t | s_t = s, a_t = a]$. The value of a state under this policy is given by value function

$$V_\pi: \mathcal{S} \to \mathbb{R},$$

defined to be $V_\pi(s, a) = \max_a Q_\pi(s, a)$ under the Bellman optimality equation.

Value Iteration (VI) is a dynamic programming algorithm that finds Q-values for state, action pairs in MDPs, by iteratively applying the Bellman optimality operator. This can be viewed as a graph diffusion where each state is a vertex and transitions define weighted edges.

Planning for a physical system may be done, at least in approximation, by defining and solving an MDP as above for the physical system. However, such an MDP may be unknown, and may be hard to formulate. Accordingly, the unknown Markov Decision Process (MDP) $\mathcal{M}$ is mapped to a new MDP through a latent space, through a mapping M.

The mapping M may be represented using a neural network parameterized by $\theta$, whose output will be denoted $M_\theta$. The mapping M is also be referred to herein as an encoder that maps from the observable state to the latent space. This mapping M maps a state $s \in \mathcal{S}$ to a latent representation $z \in \mathcal{Z} \subseteq \mathbb{R}^D$; for example, state $s \in \mathcal{S}$ may be an observable state and the latent representation z may be the latent state. In this case the latent space is modelled as a vector space $\mathbb{R}^D$. The transition function $\psi_a^T$ may also be modelled by a neural network $f_\phi: \mathcal{Z} \times \mathcal{A} \to \mathcal{Z}$ parameterized

by $\theta$.

Interestingly, the rewards $\psi_a^R$ in the observable MDP may be mapped as well, e.g., by a neural network,

$$g_\zeta: \mathcal{Z} \times \mathcal{A} \to \mathbb{R},$$

parameterized by $\zeta$, that predicts the reward for an observable state. Mapping rewards is optional. A reward function may also be formulated directly on the learned MDP; for many planning purposes, this is sufficient.

During training, a set of *experience tuples* $\mathcal{D} = \{(s_t, a_t, r_t, s_{t+1})\}_{n=1}^N$ may be obtained, e.g., by rolling out an exploration policy $\pi$ for multiple trajectories. During training, the distance between the result of transitioning in observation space, and then mapping to Z, or first mapping to Z and then transitioning in latent space may be minimized. Additionally, a state representation may optionally include information about the reward. For example, one may minimize the distance between the observed reward $\omega_a^R[s]$ and a predicted reward $g_\zeta(M_\theta(s))$. If rewards are discrete, optimization may also be modeled as a classification task. For example, a general reward loss term may be included. For example, training may minimize

$$d(M_\theta[\omega_a^T(s)], f_\phi(M_\theta(s), a)) + \mathcal{L}_R(\omega_a^R[s], g_\zeta(M_\theta(s), a)) \qquad (3)$$

, e.g., by randomly sampling batches of experience tuples from $\mathcal{D}$. One may use $d(z, z') = \frac{1}{2}(z - z')^2$ to model distances in $\mathcal{Z} \subseteq \mathbb{R}^D$, but this formulation works for general distances and latent spaces, such as cosine similarities on the hypersphere. Here, $f_\phi$ is a function that maps a point in latent space $z \in \mathcal{Z}$ to a new state $z' \in \mathcal{Z}$ by predicting an *action-effect* that acts on z. For example, one may consider $f_\phi$ to be of the form $f_\phi(z, a) = z + h_\phi(z, a)$, where $h_\phi(z, a)$ may be a feedforward network. The function $g_\zeta: \mathcal{Z} \to \mathbb{R}$ is a function that predicts the reward from z.

To force the network to differentiate between latent states, without having to introduce pixel reconstructions, and to induce a latent space with state transformations $\Psi$, one may maximize the distance between the state s currently considered and a set $\mathcal{S}_\times$ of randomly selected negative samples from the same episode. One may thus minimize

$$d(M_\theta[\omega_a^T(s)], f_\phi[M_\theta(s), a]) + \mathcal{L}_R(\omega_a^R[s], g_\zeta(M_\theta(s)), a) -$$
$$\sum_{s_\times \in \mathcal{S}_\times} d(M_\theta(s), M_\theta(s_\times)) \qquad (4)$$

e.g., using gradient descent on batches of experience tuples. Since $\mathbb{R}^D$ is unbounded, a hinge-loss $\max(0, \in - d(z, z'))$ may be used on the negative samples, to prevent infinite expansion of the distance between embeddings. Information about discrete rewards may be modelled by treating them as classes and minimizing the cross-entropy loss between the predicted and observed reward.

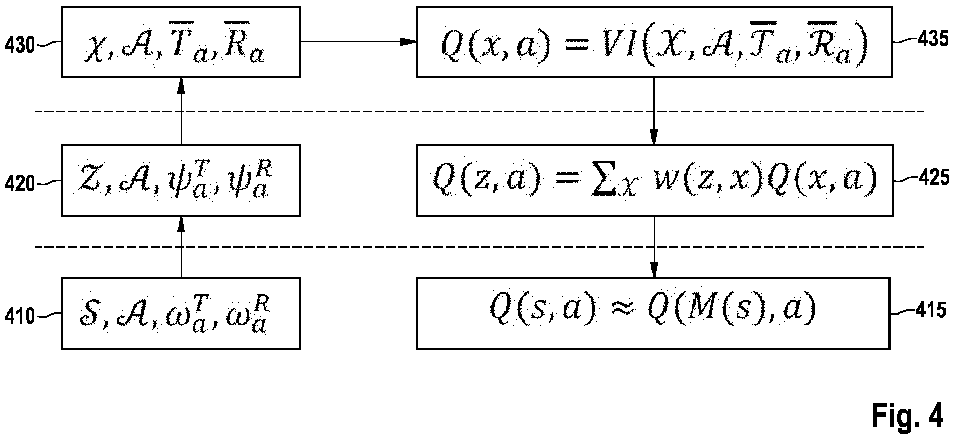

**Figure 4** shows a schematic overview of an embodiment. A set of states, actions, transition function and reward function for an MDP for a physical system is assumed in 410. The MDP may be unknown. For example, one may work from the general assumption that such an MDP is possible. Nevertheless, the states are observable and the actions may be performed on the states. The observable MPD is mapped to a latent MDP 420 with latent states, actions, transitions and rewards in the latent space. The latent MDP 420 may be discretized 430 to discretized states, actions, transition, and rewards. For example, one may learn M from S to Z and discretize Z to obtain *X*. Planning may be performed in *X*. If desired interpolated Q-values may be used to obtain a policy in $\mathcal{S}$.

For example, Q values 435 may be computed for discretized MDP 430. If desired, these may be mapped to Q values in the latent space 425, which in turn may be mapped to Q values for the original observable MDP 415. Note that rewards do not need to be modelled, but may be added in a later stage, e.g., for discretized MDP 430. Mapping the Q values for the discretized MDP 430 back to Q values for observable states and actions is especially advantageous if the MDP 410 has clearly recognizable states, e.g., for a physical system with discrete states. Translating Q values back to the original (presumed) MDP is possible, but is not needed. Instead, an observable state may be mapped to the discretized MDP and the desired action may be obtained from there. For example, if the observable states are continuous this may be used.

It was found that planning on the discretized MDP 430 provides good policies for the original state space 410. Thus, the dimensionality of the planning problem may be reduced. For example, one may use dynamic programming on the discrete set of states $X$, a discrete set of actions, which is $\bar{\mathcal{A}} = \mathcal{A}$, e.g., the same set of actions as in the original MDP, a learned transition function $\bar{\mathcal{T}}: X \times \mathcal{A} \times X \rightarrow [0,1]$, and optionally a learned reward function $\bar{\mathcal{R}}: \mathcal{X} \times \mathcal{A} \times \mathcal{X} \rightarrow \mathbb{R}$.

To obtain a good set of discrete states, one may sample L random states from the training data and encode them, i.e. $\mathcal{X} = \{M_\theta(s_l) | s_l \sim \mathcal{D}\}_{l=1}^L$, and subsequently remove duplicates.

Transitions may be modelled on the basis of similarity in the abstract space. For example, one may use a temperature softmax to model transition probabilities

$$T(x = j | x' = i, a = \alpha) = \frac{e^{d(z_j, f_\phi(z_i, \alpha))/\tau}}{\sum_{k \in \mathcal{S}} e^{d(z_k, f_\phi(z_i, \alpha))/\tau}} \qquad (5)$$

where $\tau$ is a temperature parameter.

In equation 4 a reward prediction loss encourages the latent states to contain information about the reward function. This helps separate distinct states whose transition functions are similar. During planning, this predicted reward $g_\zeta(s)$ may be used.

Given a policy $\pi$ for the discretized MDP, e.g., an optimal policy, a new state $s^* \in \mathcal{S}$, can be embedded it in the representation space Z as $z^* = M_\phi(s^*)$. A temperature softmax over its distance to each $x \in X$ may be used to compute an interpolation of the Q-values, e.g.,

$$Q(z^*, a) = \sum_{x \in \mathcal{X}} w(z^*, x) Q(x, a) \qquad (6)$$

$$w(z^*, x) = \frac{e^{d(x, z^*)/\eta}}{\sum_{x' \in \mathcal{X}} e^{d(x', z^*)/\eta}} \qquad (7)$$

where $\eta$ is a temperature parameter. These Q-values may be used, e.g., for greedy action selection for this state $s^*$, transition to a new state $s^{**}$ and iterate until the goal is reached.

The approach has been evaluated to test a) whether the structure of the original problem is recovered b) whether the resulting MDPs that are constructed are plannable and c) whether the approach can easily generalize to new reward functions/tasks in the original MDP. When the approach is used on a system with a known underlying MDP it was found that this MDP was learned well. Furthermore, embodiments have been tested on image manipulation tasks, and an object pickup task.

For example, in an embodiment, the networks were trained for 100 epochs on 1000 episodes sampled from a uniform random policy. Model parameters were optimized using Adam with a learning rate of 0.01, a batch size of 1024 and a latent size of 50. 5 negative samples were used per positive sample, sampling negatives and positives from the same episode, and set $\varepsilon$ in the hinge loss to 1. During planning, 1000 states were sampled from $\mathcal{D}$ and duplicates were removed. The value iteration ran for 500 iterations, with $\gamma = 0.9$ and $\tau = 0.1$.

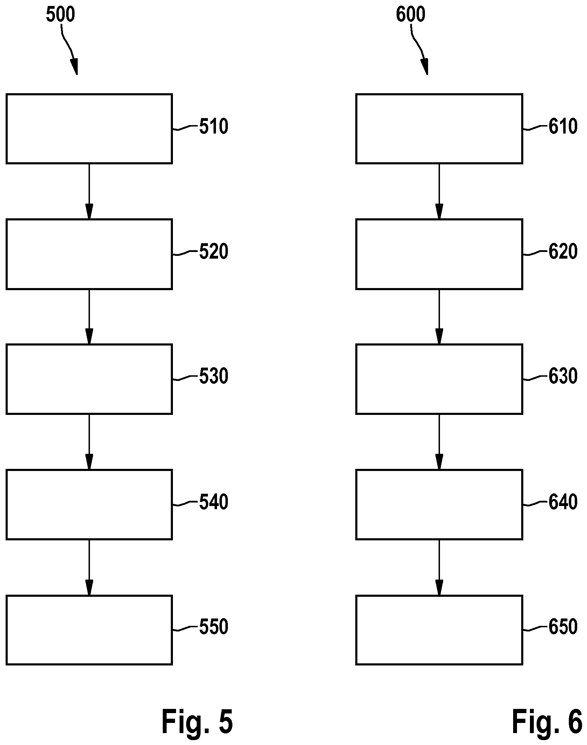

**Figure 5** schematically illustrates an example of an embodiment of a machine learning device 500 for learning to plan for a physical system. The machine learning method comprises

- accessing (510) training data, the training data comprising multiple pairs of an action and a corresponding observable state transition from a first observable state to a second observable state,
- mapping (520) an observable state to a latent state in a latent space with a machine-learnable encoder function,
- mapping (530) an action and a first latent state to a second latent state with a machine-learnable latent transition function, wherein the encoder function and latent transition function are trained on the training data to align the latent transition function with observable state transitions in the training data,
- discretizing (540) the latent space by selecting a set of vertices in the latent space,
- defining (550) a Markov decision problem on the set of vertices, wherein transition probabilities are obtained from the latent transition function.

**Figure 6** schematically illustrates an example of an embodiment of a machine learning planning method 600 for a physical system. The machine learning planning method comprises

- accessing (610) a set of vertices in a latent space defining a Markov decision problem,
- obtaining (620) a current observable state of the physical system and/or a goal observable state of the physical system, and mapping the current observable state and/or the goal observable state to a current latent state and/or a goal latent state with a machine-learnable encoder function,
- obtaining (630) a policy mapping for the Markov decision problem to reach the goal latent state from the current latent state,
- obtaining (640) an action from the policy mapping to be applied to the current observable state,
- generating (650) a signal for the physical system to transition from the current observable state according to the obtained action.

Methods 500 and 600 are computer implemented. For example, accessing training data, and/or receiving input data may be done using a communication interface, e.g., an electronic interface, a network interface, a memory interface, etc. For example, storing or retrieving parameters may be done from an electronic storage, e.g., a memory, a hard drive, etc., e.g., parameters of the networks. For example, applying a neural network to data of the training data, and/or adjusting the stored parameters to train the network may be done using an electronic computing device, e.g., a computer. The encoder and transition function can also output mean and/or variance, instead of directly the output. In case of mean and variance to obtain the output one has to sample from this defined Gaussian.

In an embodiment, the encoder function comprises a neural network and/or the latent transition function comprises a neural network. Optionally, an observed reward may be modelled, e.g., by a reward function. For example, the reward function may comprise a neural network. The neural networks may comprise one or more convolutional layers, rectifier layers, e.g., a Rectified Linear Unit (ReLU), fully connected layers and the like.

The neural networks, either during training and/or during applying may have multiple layers, which may include, e.g., convolutional layers and the like. For example, the neural networks may have at least 2, 5, 10, 15, 20 or 40 hidden layers, or more, etc. The number of neurons in the neural network may, e.g., be at least 10, 100, 1000, 10000, 100000, 1000000, or more, etc.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform method 500 and/or 600. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

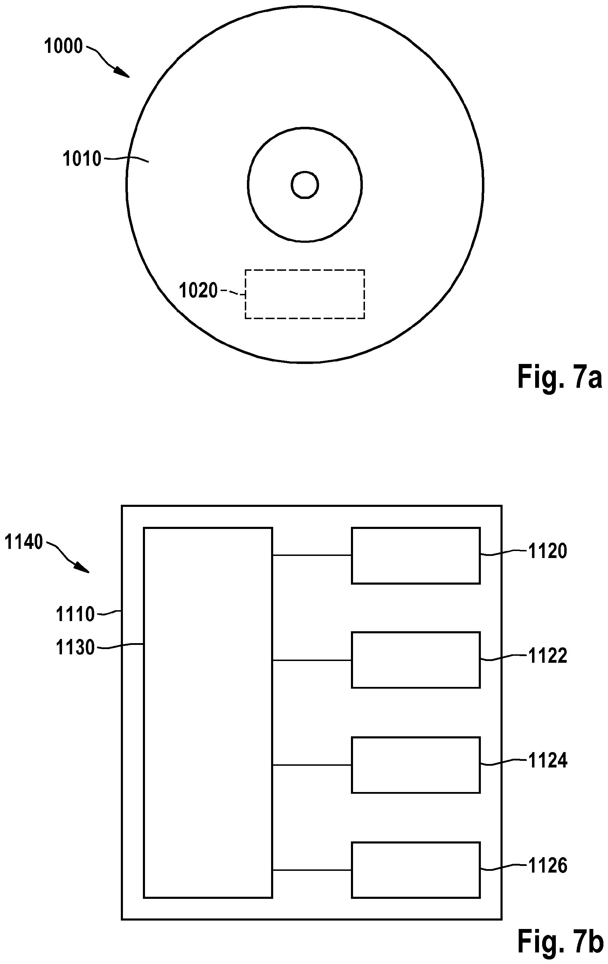

**Figure 7a** shows a computer readable medium 1000 having a writable part 1010 comprising a computer program 1020, the computer program 1020 comprising instructions for causing a processor system to perform a method of planning or learning a planner, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said method of planning or learning a planner.

**Figure 7b** shows in a schematic representation of a processor system 1140 according to an embodiment of a planner or training a planner. The processor system comprises one or more integrated circuits 1110. The architecture of the one or more integrated circuits 1110 is schematically shown in Figure 7b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., the planner or training device may comprise a processor circuit and a memory circuit, the processor being arranged to execute software stored in the memory circuit. For example, the processor circuit may be an Intel Core i7 processor, ARM Cortex-R8, etc. In an embodiment, the processor circuit may be ARM Cortex M0. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

It will be apparent that various information described as stored in a storage may be stored in the memory. In this respect, the memory may also be considered to constitute a "storage device" and the storage may be considered a "memory." Various other arrangements will be apparent. Further, the memory and storage may both be considered to be "non-transitory machine-readable media." As used herein, the term "non-transitory" will be understood to exclude transitory signals but to include all forms of storage, including both volatile and non-volatile memories.

While the device is shown as including one of each described component, the various components may be duplicated in various embodiments. For example, the processor may include multiple microprocessors that are configured to independently execute the methods described herein or are configured to perform steps or subroutines of the methods described herein such that the multiple processors cooperate to achieve the functionality described herein. Further, where the device is implemented in a cloud computing system, the various hardware components may belong to separate physical systems. For example, the processor may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

**Claims**

1. A processor system comprising a machine learning device (110) and a machine learning planner (160) for a physical system, the machine learning device being in communication with the machine learning planner, the physical system being arranged with multiple observable states in which the physical system may be configured, and a set of multiple actions which may be performed on the physical system to cause a state transition from a first observable state of the physical system to a second observable state of the physical system, wherein the physical system comprises one or more movable parts, the observable states comprising information describing the position and/or orientation of the one or more movable parts, and wherein the planner is a motion planner for planning a sequence of actions to control the physical system towards a goal state, wherein the observable states of the physical system are obtained by observing the physical system with one or more sensors, the machine learning device comprising

- a storage configured to store training data, the training data comprising multiple pairs of an action and a corresponding observable state transition from a first observable state to a second observable state,
- a processor configured to

- train a machine-learnable encoder function, which is configured to map an observable state to a latent state in a latent space,
- train a machine-learnable latent transition function, which is configured to map an action and a first latent state to a second latent state, wherein the encoder function and latent transition function are trained on the training data to align the latent transition function with observable state transitions in the training data,
- after the latent transition function and the encoder function have been trained, discretize the latent space by selecting a set of vertices in the latent space,
- define a Markov decision problem on the set of vertices, wherein transition probabilities are obtained from the latent transition function, wherein obtaining a transition probability for an action from a first vertex in the set of vertices to a second vertex in the set of vertices comprises applying the latent transition function to the first vertex and action to obtain a predicted vertex and computing a distance in the latent space between the predicted vertex and the second vertex, the machine learning planner comprising

- a storage configured to store the set of vertices in the latent space defining the Markov decision problem obtained from the machine learning device,
- a sensor for obtaining an observable state of the physical system,
- a processor configured to

- obtain a current observable state of the physical system and a goal observable state of the physical system, and
- map, using the trained machine-learnable encoder function, the current observable state and the goal observable state to a current latent state and a goal latent state, the current latent state and the goal latent state each corresponding to a vertex in the set of vertices,
- obtain a policy mapping for the Markov decision problem to reach the goal latent state from the current latent state,
- obtain an action from the policy mapping to be applied to the current observable state,
- generate a signal for the physical system to transition from the current observable state according to the obtained action.

2. A processor system as in any one of the preceding claims, wherein at least one of the encoder function and the latent transition function are neural networks.

3. A processor system as in any one of the preceding claims, wherein in the machine learning device, selecting a set of vertices in the latent space comprises mapping at least part of the observable states in the training data to the latent space using the encoder function.

4. A processor system as in any one of the preceding claims, wherein in the machine learning device, the processor is further configured to solve the Markov decision problem by obtaining a policy mapping, the policy mapping from the latent states to actions to reach a latent goal state.

5. A processor system as in any one of the preceding claims, wherein an observable state of the physical system comprises

- one or more location parameters, wherein a location parameter represents a location, a translation, or an angle of a movable part of the physical system, and/or
- an image of the physical system.

6. A processor system as in any one of the preceding claims, wherein in the machine learning device, the encoder function and latent transition function are trained with respect to a loss function, wherein the loss function is arranged to

- minimize a distance between the latent states corresponding to the first observable state and the second observable state in a training pair,
- minimize a distance between the second observable state in a training pair and the transition model applied to the action and the first observable state, and/or
- maximize the distance between the latent state corresponding to the first observable state and/or the second observable state in a training pair and the latent state corresponding to the observable state and/or the second observable state in a random training pair.

7. A processor system as in Claim 6, wherein in the machine learning device, the distance between the latent states corresponding to the first observable state and the second observable state in a training pair and/or the distance between the second observable state in a training pair and the transition model applied to the action and the first observable state are determined using a distance function, the distance function comprising a cosine similarity.

8. A processor system as in any one of the preceding claims, wherein the latent space is

   - a topologically compact space,
   - a hypersphere,
   - a product of a hypersphere and a further space, or
   - a product of two or more hyperspheres.

9. A processor system as in any one of the preceding claims, wherein the movable parts comprise multiple joints, the actions comprising rotating and/or translating a joint.

10. A processor system as in any one of the preceding claims, wherein the physical system is a vehicle, a domestic appliance, autonomous driving car, a power tool, or a manufacturing machine.

11. A processor system as in any one of the preceding claims, wherein the physical system comprises a robot arm.

12. A processor system as in Claim 11, wherein the robot arm comprises one or more links (241), tools (242), and joints (243), wherein the robot arm is controlled by a controller (220) to actuate the joints, the robot arm (240) is associated with one or more sensors, wherein a sensor is a camera (240), wherein the sensor outputs, including an image, is an observable state of the robot arm.

13. A processor system as in any one of claims 11 and 12, wherein a manipulation task is solved for the robot arm, which comprises multiple rotatable joints and translatable links, the manipulation task comprising picking up an object and moving the object to a position.

14. A computer-implemented machine learning method (500) for learning to plan and for planning for a physical system, the physical system being arranged with multiple observable states in which the physical system may be configured, and a set of multiple actions which may be performed on the physical system to cause a state transition from a first observable state of the physical system to a second observable state of the physical system, wherein the physical system comprises one or more movable parts, the observable states comprising information describing the position and/or orientation of the one or more movable parts, and wherein the plan is a motion plan for planning a sequence of actions to control the physical system towards a goal state, wherein the observable states of the physical system are obtained by observing the physical system with one or more sensors, the machine learning method comprising

    - accessing (510) training data, the training data comprising multiple pairs of an action and a corresponding observable state transition from a first observable state to a second observable state,
    - training a machine-learnable encoder function, which is configured to map an observable state to a latent state in a latent space,
    - training a machine-learnable latent transition function, which is configured to map an action and a first latent state to a second latent state, wherein the encoder function and latent transition function are trained on the training data to align the latent transition function with observable state transitions in the training data,
    - after the latent transition function and the encoder function have been trained, discretizing (540) the latent space by selecting a set of vertices in the latent space,
    - defining (550) a Markov decision problem on the set of vertices, wherein transition probabilities are obtained from the latent transition function, wherein obtaining a transition probability for an action from a first vertex in the set of vertices to a second vertex in the set of vertices comprises applying the latent transition function to the first vertex and action to obtain a predicted vertex and computing a distance in the latent space between the predicted vertex and the second vertex,
the computer-implemented machine learning planning method (600) comprising
- accessing (610) the set of vertices in the latent space defining the Markov decision problem,
- obtaining (620) a current observable state of the physical system with a sensor and a goal observable state of the physical system, and mapping, using the trained machine-learnable encoder function, the current observable state and the goal observable state to a current latent state and a goal latent state, the current latent state and the goal latent state each corresponding to a vertex in the set of vertices,
- obtaining (630) a policy mapping for the Markov decision problem to reach the goal latent state from the current latent state,
- obtaining (640) an action from the policy mapping to be applied to the current observable state,
- generating (650) a signal for the physical system to transition from the current observable state according to the obtained action.

15. A transitory or non-transitory computer readable medium (1000) comprising data (1020) representing instructions, which when executed by a processor system, cause the processor system to perform the method according to claim 14.

**Patentansprüche**

1. Ein Prozessorsystem, umfassend eine Maschinenlernvorrichtung (110) und einen Maschineniemplaner (160) für ein physikalisches System, wobei sich die Maschinenlernvorrichtung in Kommunikation mit dem Maschinenlernplaner befindet, wobei das physikalische System mit mehreren beobachtbaren Zuständen angeordnet ist, in denen das physikalische System konfiguriert sein kann, und einem Satz von mehreren Aktionen, die in dem physikalischen System ausgeführt werden können, um einen Zustandsübergang von einem ersten beobachtbaren Zustand des physikalischen Systems in einen zweiten beobachtbaren Zustand des physikalischen Systems zu veranlassen, wobei das physikalische System ein oder mehrere bewegliche Teile umfasst, die beobachtbaren Zustände Informationen umfassen, welche die Position und/oder Ausrichtung des einen oder mehrerer beweglicher Teile beschreiben, und wobei der Planer ein Bewegungsplaner zum Planen einer Folge von Aktionen ist, um das physikalische System in Richtung eines Zielzustands zu steuern, wobei die beobachtbaren Zustände des physikalischen Systems durch Beobachten des physikalischen Systems mit einem oder mehreren Sensoren erhalten werden, wobei die Maschinenlernvorrichtung umfasst

- einen Speicher, der konfiguriert ist, um Trainingsdaten zu speichern, wobei die Trainingsdaten mehrere Paare einer Aktion und eines entsprechenden beobachtbaren Zustandsübergangs von einem ersten beobachtbaren Zustand in einen zweiten beobachtbaren Zustand umfassen,
- einen Prozessor, der konfiguriert ist, um

- eine maschinenlernbare Encoderfunktion zu trainieren, die konfiguriert ist, um einen beobachtbaren Zustand einem latenten Zustand in einem latenten Raum zuzuordnen,
- eine maschinenlernbare latente Übergangsfunktion zu trainieren, die konfiguriert ist, um eine Aktion und einen ersten latenten Zustand einem zweiten latenten Zustand zuzuordnen, wobei die Encoderfunktion und die latente Übergangsfunktion in den Trainingsdaten trainiert werden, um die latente Übergangsfunktion an die beobachtbaren Zustandsübergänge in den Trainingsdaten anzugleichen,
- nachdem die latente Übergangsfunktion und die Encoderfunktion trainiert worden sind, den latenten Raum durch Auswählen eines Satzes von Scheitelpunkten im latenten Raum zu diskretisieren,
- ein Markov-Entscheidungsproblem an dem Satz von Scheitelpunkten zu definieren, wobei Übergangswahrscheinlichkeiten aus der latenten Übergangsfunktion erhalten werden, wobei das Erhalten einer Übergangswahrscheinlichkeit für eine Aktion von einem ersten Scheitelpunkt in dem Satz von Scheitelpunkten zu einem zweiten Scheitelpunkt in dem Satz von Scheitelpunkten das Anwenden der latenten Übergangsfunktion auf den ersten Scheitelpunkt und Aktion, um einen vorhergesagten Scheitelpunkt zu erhalten, und Berechnen einer Distanz in dem latenten Raum zwischen dem vorhergesagten Scheitelpunkt und dem zweiten Scheitelpunkt umfasst,
wobei das Maschinenlemverfahren umfasst

- einen Speicher, der konfiguriert ist, um den Satz von Scheitelpunkten in dem latenten Raum, der das Markov-Entscheidungsproblem definiert, das von der Maschinenlernvorrichtung erhalten wird, zu speichern,
- einen Sensor zum Erhalten eines beobachtbaren Zustands des physikalischen Systems,

- einen Prozessor, der konfiguriert ist, um

- einen aktuellen beobachtbaren Zustand des physikalischen Systems und einen beobachtbaren Zielzustand des physikalischen Systems zu erhalten, und
- unter Verwendung der trainierten maschinenlernbaren Encoderfunktion den aktuellen beobachtbaren Zustand und den beobachtbaren Zielzustand einem aktuellen latenten Zustand und einem latenten Zielzustand zuzuordnen, wobei der aktuelle latente Zustand und der latente Zielzustand jeweils einem Scheitelpunkt im Satz von Scheitelpunkten entsprechen,
- eine Richtlinienzuordnung für das Markov-Entscheidungsproblem für jeden globalen latenten Zustand aus dem aktuellen latenten Zustand zu erhalten,
- eine Aktion aus der Richtlinienzuordnung zu erhalten, um auf den aktuellen beobachtbaren Zustand angewendet zu werden,
- ein Signal für das physikalische System zu erzeugen, um entsprechend der erhaltenen Aktion vom aktuellen beobachtbaren Zustand überzugehen.

2. Ein Prozessorsystem nach einem der vorstehenden Ansprüche, wobei mindestens eine von der Encoderfunktion und der latenten Übergangsfunktion neuronale Netzwerke sind.

3. Ein Prozessorsystem nach einem der vorstehenden Ansprüche, wobei die Maschinenlernvorrichtung, die einen Satz von Scheitelpunkten in dem latenten Raum auswählt, das Zuordnen von mindestens einem Teil der beobachtbaren Zustände in den Trainingsdaten zum latenten Raum unter Verwendung der Encoderfunktion umfasst.

4. Ein Prozessorsystem nach einem der vorstehenden Ansprüche, wobei in der Maschinenlernvorrichtung der Prozessor weiter konfiguriert ist, um das Markov-Entscheidungsproblem durch Erhalten einer Richtlinienzuordnung löst, wobei die Richtlinienzuordnung von den latenten Zuständen zu Aktionen erfolgt, um einen latenten Zielzustand zu erreichen.

5. Ein Prozessorsystem nach einem der vorstehenden Ansprüche, wobei ein beobachtbarer Zustand des physikalischen Systems umfasst

- einen oder mehrere Lageparameter, wobei ein Lageparameter eine Lage, eine Translation oder einen Winkel eines beweglichen Teils des physikalischen Systems darstellt, und/oder
- ein Bild des physikalischen Systems.

6. Ein Prozessorsystem nach einem der vorstehenden Ansprüche, wobei die Maschinenlernvorrichtung, die Encoderfunktion und latente Übergangsfunktion in Bezug auf eine Verlustfunktion trainiert werden, wobei die Verlustfunktion angeordnet ist, um

- eine Distanz zwischen den latenten Zuständen, die dem ersten beobachtbaren Zustand und dem zweiten beobachtbaren Zustand in einem Trainingspaar entsprechen, zu minimieren,
- eine Distanz zwischen dem zweiten beobachtbaren Zustand in einem Trainingspaar und dem Übergangsmodell, das auf die Aktion angewendet wird, und dem und dem ersten beobachtbaren Zustand zu minimieren, und/oder
- die Distanz zwischen dem latenten Zustand, der dem ersten beobachtbaren Zustand und/oder dem zweiten beobachtbaren Zustand in einem Trainingspaar entspricht, und dem latenten Zustand, der dem beobachtbaren Zustand und/oder dem zweiten beobachtbaren Zustand in einem Zufallstrainingspaar entspricht, zu maximieren.

7. Ein Prozessorsystem nach Anspruch 6, wobei in der Maschinenlernvorrichtung die Distanz zwischen den latenten Zuständen, die dem ersten beobachtbaren Zustand und dem zweiten beobachtbaren Zustand in einem Trainingspaar entsprechen, und/oder die Distanz zwischen dem zweiten beobachtbaren Zustand in einem Trainingspaar und dem Übergangsmodell, das auf die Aktion angewendet wird, und dem ersten beobachtbaren Zustand unter Verwendung einer Distanzfunktion bestimmt werden, wobei die Distanzfunktion eine Kosinus-Ähnlichkeit umfasst.

8. Ein Prozessorsystem nach einem der vorstehenden Ansprüche, wobei der latente Raum ist

- ein topologisch kompakter Raum,
- eine Hypersphäre,
- ein Produkt aus einer Hypersphäre und einem weiteren Raum, oder

- ein Produkt aus zwei oder mehr Hypersphären.

9. Ein Prozessorsystem nach einem der vorstehenden Ansprüche, wobei die beweglichen Teile mehrere Verbindungsstellen umfassen, wobei die Aktionen Drehen und/oder Verschieben einer Verbindungsstelle umfassen.

10. Ein Prozessorsystem nach einem der vorstehenden Ansprüche, wobei das physikalische System ein Fahrzeug, ein Haushaltsgerät, ein autonom fahrendes Auto, ein Elektrowerkzeug, oder eine Fertigungsmaschine ist.

11. Ein Prozessorsystem nach einem der vorstehenden Ansprüche, wobei das physikalische System einen Roboterarm umfasst

12. Ein Prozessorsystem nach Anspruch 11, wobei der Roboterarm einen oder mehrere Anbindungen (241), Werkzeuge (242), und Verbindungsstellen (243) umfasst, wobei der Roboterarm durch eine Steuereinheit (220) gesteuert wird, um die Verbindungsstellen zu betätigen, wobei der Roboterarm (240) mit einem oder mehreren Sensoren verknüpft ist, wobei ein Sensor eine Kamera (240) ist, wobei die Sensorausgänge, die ein Bild beinhalten, ein beobachtbarer Zustand des Roboterarms sind.

13. Ein Prozessorsystem nach einem der Ansprüche 11 und 12, wobei eine Handhabungsaufgabe für den Roboterarm gelöst wird, der mehrere drehbare Anbindungen und verschiebbare Verknüpfungen umfasst, wobei die Handhabungsaufgabe das Aufnehmen eines Gegenstandes und Bewegen des Gegenstandes in eine Position umfasst.

14. Ein Computerimplementiertes Maschinenlemverfahren (500), um Planen zu lernen und zum Planen für ein physikalisches System, wobei das physikalische System mit mehreren beobachtbaren Zuständen angeordnet ist, in denen das physikalische System konfiguriert sein kann, und einem Satz von mehreren Aktionen, die in dem physikalischen System ausgeführt werden können, um einen Zustandsübergang von einem ersten beobachtbaren Zustand des physikalischen Systems in einen zweiten beobachtbaren Zustand des physikalischen Systems zu veranlassen, wobei das physikalische System ein oder mehrere bewegliche Teile umfasst, die beobachtbaren Zustände Informationen umfassen, welche die Position und/oder Ausrichtung des einen oder mehrerer beweglicher Teile beschreiben, und wobei der Plan ein Bewegungsplan zum Planen einer Folge von Aktionen ist, um das physikalische System in Richtung eines Zielzustands zu steuern, wobei die beobachtbaren Zustände des physikalischen Systems durch Beobachten des physikalischen Systems mit einem oder mehreren Sensoren erhalten werden, wobei das Maschinenlemverfahren umfasst

- Zugreifen (510) auf Trainingsdaten, wobei die Trainingsdaten mehrere Paare einer Aktion und eines entsprechenden beobachtbaren Zustandsübergangs von einem ersten beobachtbaren Zustand in einen zweiten beobachtbaren Zustand umfassen,

- - Trainieren einer maschinenlernbaren Encoderfunktion, die konfiguriert ist, um einen beobachtbaren Zustand einem latenten Zustand in einem latenten Raum zuzuordnen,
- - Trainieren einer maschinenlernbaren latenten Übergangsfunktion, die konfiguriert ist, um eine Aktion und einen ersten latenten Zustand einem zweiten latenten Zustand zuzuordnen, wobei die Encoderfunktion und die latente Übergangsfunktion in den Trainingsdaten trainiert werden, um die latente Übergangsfunktion an die beobachtbaren Zustandsübergänge in den Trainingsdaten anzugleichen,
- - nachdem die latente Übergangsfunktion und die Encoderfunktion trainiert worden sind, Diskretieren (540) des latenten Raums durch Auswählen eines Satzes von Scheitelpunkten im latenten Raum,
- - Definieren (550) eines Markov-Entscheidungsproblems an dem Satz von Scheitelpunkten, wobei Übergangswahrscheinlichkeiten aus der latenten Übergangsfunktion erhalten werden, wobei das Erhalten einer Übergangswahrscheinlichkeit für eine Aktion von einem ersten Scheitelpunkt in dem Satz von Scheitelpunkten zu einem zweiten Scheitelpunkt in dem Satz von Scheitelpunkten das Anwenden der latenten Übergangsfunktion auf den ersten Scheitelpunkt und Aktion, um einen vorhergesagten Scheitelpunkt zu erhalten, und Berechnen einer Distanz in dem latenten Raum zwischen dem vorhergesagten Scheitelpunkt und dem zweiten Scheitelpunkt umfasst, wobei das computerimplementierte Maschinenlernplanungsverfahren (600) umfasst

- Zugreifen (610) auf den Satz von Scheitelpunkten in dem latenten Raum, der das Markov-Entscheidungsproblem definiert,

- - Erhalten (620) eines aktuellen beobachtbaren Zustands des physikalischen Systems mit einem Sensor und einem beobachtbaren Zielzustand des physikalischen Systems und Zuordnen, unter Verwendung der trainierten maschinenlernbaren Encoderfunktion, des aktuellen beobachtbaren Zustands und des beobachtbaren Zielzustands einem aktuellen latenten Zustand und einem latenten Zielzustand, wobei der aktuelle latente Zustand und der latente Zielzustand jeweils einem Scheitelpunkt im Satz von Scheitelpunkten entsprechen,

- - Erhalten (630) einer Richtlinienzuordnung für das Markov-Entscheidungsproblem für jeden globalen latenten Zustand aus dem aktuellen latenten Zustand,
- - Erhalten (640) einer Aktion aus der Richtlinienzuordnung, um auf den aktuellen beobachtbaren Zustand angewendet zu werden,
- - Erzeugen eines Signals für das physikalische System, um entsprechend der erhaltenen Aktion vom aktuellen beobachtbaren Zustand überzugehen.

**15.** Ein flüchtiges oder nichtflüchtiges computerlesbares Medium (1000), umfassend Daten (1020), die Anweisungen darstellen, die, wenn sie von einem Prozessorsystem ausgeführt werden, das Prozessorsystem veranlassen, das Verfahren nach Anspruch 14 durchzuführen.

## Revendications

**1.** Un système de processeur comprenant un dispositif d'apprentissage automatique (110) et un planificateur d'apprentissage automatique (160) pour un système physique, le dispositif d'apprentissage automatique étant en communication avec le planificateur d'apprentissage automatique, le système physique étant agencé avec de multiples états observables dans lesquels le système physique peut être configuré, et un ensemble de multiples actions qui peuvent être réalisées sur le système physique pour provoquer une transition d'état d'un premier état observable du système physique à un second état observable du système physique, dans lequel le système physique comprend une ou plusieurs parties mobiles, les états observables comprenant des informations décrivant la position et/ou l'orientation des une ou plusieurs parties mobiles, et dans lequel le planificateur est un planificateur de mouvement pour la planification d'une séquence d'actions pour commander le système physique vers un état cible, dans lequel les états observables du système physique sont obtenus en observant le système physique avec un ou plusieurs capteurs, le dispositif d'apprentissage automatique comprenant

- un stockage configuré pour stocker des données d'apprentissage, les données d'apprentissage comprenant de multiples paires d'une action et d'une transition d'état observable correspondante d'un premier état observable à un second état observable,
- un processeur configuré pour

- apprendre une fonction de codeur pouvant être apprise par machine qui est configurée pour mapper un état observable dans un état latent dans un espace latent,
- apprendre une fonction de transition latente pouvant être apprise par machine qui est configurée pour mapper une action et un premier état latent dans un second état latent, dans lequel la fonction de codeur et la fonction de transition latente sont apprises sur les données d'apprentissage pour aligner la fonction de transition latente avec des transitions d'état observables dans les données d'apprentissage,
- après que la fonction de transition latente et la fonction de codeur ont été apprises, discrétiser l'espace latent en sélectionnant un ensemble de sommets dans l'espace latent,
- définir un problème de décision markovien sur l'ensemble de sommets, dans lequel des probabilités de transition sont obtenues à partir de la fonction de transition latente, dans lequel l'obtention d'une probabilité de transition pour une action d'un premier sommet dans l'ensemble de sommets à un second sommet dans l'ensemble de sommets comprend l'application de la fonction de transition latente au premier sommet et à l'action pour obtenir un sommet prédit et calculer une distance dans l'espace latent entre le sommet prédit et le second sommet, le planificateur d'apprentissage automatique comprenant

- un stockage configuré pour stocker l'ensemble de sommets dans l'espace latent définissant le problème de décision markovien obtenu à partir du dispositif d'apprentissage automatique,
- un capteur pour obtenir un état observable du système physique,
- un processeur configuré pour

- obtenir un état observable actuel du système physique et un état observable cible du système physique et
- mapper, en utilisant la fonction de codeur pouvant être apprise par machine apprise, l'état observable actuel et l'état observable cible dans un état latent actuel et un état latent cible, l'état latent actuel et l'état latent cible correspondant chacun à un sommet dans l'ensemble de sommets,
- obtenir un mappage de police pour le problème de décision markovien pour atteindre l'état latent cible depuis l'état latent actuel,
- obtenir une action à partir du mappage de police à appliquer à l'état observable actuel,
- générer un signal pour que le système physique effectue la transition de l'état observable actuel selon l'action obtenue.

2. Un système de processeur selon l'une quelconque des revendications précédentes, dans lequel au moins une de la fonction de codeur et de la fonction de transition latente sont des réseaux neuronaux.

3. Un système de processeur selon l'une quelconque des revendications précédentes, dans lequel dans le dispositif d'apprentissage automatique, la sélection d'un ensemble de sommets dans l'espace latent comprend le mappage d'au moins une partie des états observables dans les données d'apprentissage dans l'espace latent en utilisant la fonction de codeur.

4. Un système de processeur selon l'une quelconque des revendications précédentes, dans lequel dans le dispositif d'apprentissage automatique, le processeur est en outre configuré pour résoudre le problème de décision markovien en obtenant un mappage de police, la police mappant des états latents à des actions pour atteindre un état cible latent.

5. Un système de processeur selon l'une quelconque des revendications précédentes, dans lequel un état observable du système physique comprend

- un ou plusieurs paramètres d'emplacement, dans lequel un paramètre d'emplacement représente un emplacement, une translation ou un angle d'une partie mobile du système physique et/ou
- une image du système physique.

6. Un système de processeur selon l'une quelconque des revendications précédentes, dans lequel dans le dispositif d'apprentissage automatique, la fonction de codeur et la fonction de transition latente sont apprises par rapport à une fonction de perte, dans lequel la fonction de perte est agencée pour

- réduire une distance entre les états latents correspondant au premier état observable et au second état observable dans une paire d'apprentissage,
- réduire une distance entre le second état observable dans une paire d'apprentissage et le modèle de transition appliqué à l'action et le premier état observable et/ou
- augmenter la distance entre l'état latent correspondant au premier état observable et/ou au second état observable dans une paire d'apprentissage et l'état latent correspondant à l'état observable et/ou au second état observable dans une paire d'apprentissage aléatoire.

7. Un système de processeur selon la revendication 6, dans lequel dans le dispositif d'apprentissage automatique, la distance entre les états latents correspondant au premier état observable et au second état observable dans une paire d'apprentissage et/ou la distance entre le second état observable dans une paire d'apprentissage et le modèle de transition appliqué à l'action et le premier état observable sont déterminées en utilisant une fonction de distance, la fonction de distance comprenant une similarité de cosinus.

8. Un système de processeur selon l'une quelconque des revendications précédentes, dans lequel l'espace latent est

- un espace compact topologiquement,
- une hypersphère,
- un produit d'une hypersphère et d'un espace supplémentaire ou
- un produit de deux ou plus hypersphères.

9. Un système de processeur selon l'une quelconque des revendications précédentes, dans lequel les parties mobiles comprennent de multiples joints, les actions comprenant la rotation et/ou la translation d'un joint.

10. Un système de processeur selon l'une quelconque des revendications précédentes, dans lequel le système physique est un véhicule, un appareil électroménager, un véhicule à conduite autonome, un outil électrique ou une machine de production.

**11.** Un système de processeur selon l'une quelconque des revendications précédentes, dans lequel le système physique comprend un bras de robot.

**12.** Un système de processeur selon la revendication 11, dans lequel le bras de robot comprend un ou plusieurs liens (241), outils (242) et joints (243), dans lequel le bras de robot est commandé par un dispositif de commande (220) pour actionner les joints, le bras de robot (240) est associé à un ou plusieurs capteurs, dans lequel un capteur est une caméra (240), dans lequel les sorties de capteur, incluant une image, sont un état observable du bras de robot.

**13.** Un système de processeur selon l'une quelconque des revendications 11 et 12, dans lequel une tâche de manipulation est résolue pour le bras de robot, qui comprend de multiples joints rotatifs et liens translatables, la tâche de manipulation comprenant la saisie d'un objet et le déplacement de l'objet dans une position.

**14.** Un procédé d'apprentissage automatique mis en oeuvre par ordinateur (500) pour apprendre à planifier et pour la planification pour un système physique, le système physique étant agencé avec de multiples états observables dans lesquels le système physique peut être configuré, et un ensemble de multiples actions qui peuvent être réalisées sur le système physique pour provoquer une transition d'état d'un premier état observable du système physique à un second état observable du système physique, dans lequel le système physique comprend une ou plusieurs parties mobiles, les états observables comprenant des informations décrivant la position et/ou l'orientation des une ou plusieurs parties mobiles, et dans lequel le plan est un plan de mouvement pour la planification d'une séquence d'actions pour commander le système physique vers un état cible, dans lequel les états observables du système physique sont obtenus en observant le système physique avec un ou plusieurs capteurs, le procédé d'apprentissage automatique comprenant

- l'accès (510) à des données d'apprentissage, les données d'apprentissage comprenant de multiples paires d'une action et d'une transition d'état observable correspondante d'un premier état observable à un second état observable,

- l'apprentissage d'une fonction de codeur pouvant être apprise par machine qui est configurée pour mapper un état observable dans un état latent dans un espace latent,
- l'apprentissage d'une fonction de transition latente pouvant être apprise par machine qui est configurée pour mapper une action et un premier état latent dans un second état latent, dans lequel la fonction de codeur et la fonction de transition latente sont apprises sur les données d'apprentissage pour aligner la fonction de transition latente avec des transitions d'état observables dans les données d'apprentissage,
- après que la fonction de transition latente et la fonction de codeur ont été apprises, la discrétisation (540) de l'espace latent en sélectionnant un ensemble de sommets dans l'espace latent,
- la définition (550) d'un problème de décision markovien sur l'ensemble de sommets, dans lequel des probabilités de transition sont obtenues à partir de la fonction de transition latente, dans lequel l'obtention d'une probabilité de transition pour une action d'un premier sommet dans l'ensemble de sommets à un second sommet dans l'ensemble de sommets comprend l'application de la fonction de transition latente au premier sommet et à l'action pour obtenir un sommet prédit et le calcul d'une distance dans l'espace latent entre le sommet prédit et le second sommet, le procédé de planification d'apprentissage automatique mis en oeuvre par ordinateur (600) comprenant

- l'accès (610) à l'ensemble de sommets dans l'espace latent définissant le problème de décision markovien,

- l'obtention (620) d'un état observable actuel du système physique avec un capteur et un état observable cible du système physique, et le mappage, en utilisant la fonction de codeur pouvant être apprise par machine apprise, de l'état observable actuel et l'état observable cible dans un état latent actuel et un état latent cible, l'état latent actuel et l'état latent cible correspondant chacun à un sommet dans l'ensemble de sommets,
- l'obtention (630) d'un mappage de police pour le problème de décision markovien pour atteindre l'état latent cible depuis l'état latent actuel,
- l'obtention (640) d'une action à partir du mapping de police à appliquer à l'état observable actuel,
- la génération (650) d'un signal pour que le système physique effectue la transition de l'état observable actuel selon l'action obtenue.

**15.** Un support transitoire ou non transitoire lisible par ordinateur (1000) comprenant des données (1020) représentant des instructions qui, lorsqu'elles sont exécutées par un système de processeur, amènent le système de processeur à effectuer le procédé selon la revendication 14.

Fig. 1a

Fig. 1b

160 — 
170
180
190

**Fig. 1c**

160 —
171 — 181
172 — 182
174 — 183
175 — 184

**Fig. 1d**

200

212

210

214

220

**Fig. 2a**

243

240

241

242

241

243

230

243

241

220

**Fig. 2b**

Fig. 3a

Fig. 3b

EP 3 770 820 B1

**Fig. 4**

Fig. 5

Fig. 6

**Fig. 7a**

**Fig. 7b**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AVIV TAMAR.** *Value Iteration Networks*

- **AMY ZHANG.** *Learning Causal State Representations of Partially Observable Environments*